# EUROPÄISCHE PATENTSCHRIFT

(11) **EP 3 797 659 B1**
(45) Veröffentlichungstag und Bekanntmachung des Hinweises auf die Patenterteilung: **01.06.2022**
(21) Anmeldenummer: 19199532.3
(22) Anmeldetag: 25.09.2019
(51) Int. Cl.: A47K 3/16

(54) **BEFESTIGUNGSVORRICHTUNG**
ATTACHMENT DEVICE
DISPOSITIF DE FIXATION

(43) Veröffentlichungstag der Anmeldung: 31.03.2021
(73) Patentinhaber: Geberit International AG, 8645 Jona (CH)
(72) Erfinder: BÄNZIGER, David, 8636 Wald (CH)
(74) Vertreter: Frischknecht, Harry Ralph

(56) Entgegenhaltungen:
- DE-A1-102012 007 309
- DE-U1- 29 704 638

## Beschreibung

### TECHNISCHES GEBIET

Die vorliegende Erfindung betrifft eine Befestigungsvorrichtung nach dem Oberbegriff von Anspruch 1.

### STAND DER TECHNIK

Aus der DE 10 2012 007 309 ist eine Befestigungsvorrichtung zur Befestigung eines sanitären Wannenelementes bekannt geworden. Dabei wird die Befestigungsvorrichtung zu einem an einer Wand montierten Befestigungsprofil geklemmt und anschliessend wird ein Klemmelement mittels einer Flügelmutter festgezogen und das Wannenelement wird gegen die Wand geklemmt.

Nachteilig an der technischen Lehre der DE 10 2012 007 309 ist die Abstützung der Befestigungsvorrichtung am Befestigungsprofil.

### DARSTELLUNG DER ERFINDUNG

Ausgehend von diesem Stand der Technik liegt der Erfindung eine Aufgabe zugrunde, eine Befestigungsvorrichtung anzugeben, welche die Nachteile des Standes der Technik überwindet. Eine besonders bevorzugte Aufgabe ist es, eine Befestigungsvorrichtung anzugeben, welche eine verbesserte Abstützung erlaubt.

Diese bevorzugte Aufgabe löst der Gegenstand von Anspruch 1. Demgemäss dient eine Befestigungsvorrichtung der Fixierung eines Randes eines sanitären Wannenelementes, wie eine Badewanne oder eine Duschwanne, gegen eine Wand, wobei die Befestigungsvorrichtung mit einem sich in Richtung einer Profilasche erstreckendem Befestigungsprofil verbindbar ist. Typischerweise ist das Befestigungsprofil fest an der Wand montiert.

Die Befestigungsvorrichtung umfasst
ein Supportelement mit einer Supportoberseite und einer Supportunterseite,
ein auf der Supportoberseite aufliegendes Klemmelement mit einer mit dem Wannenelement in Kontakt bringbaren Klemmfläche,
ein Betätigungselement, mit welchem eine Klemmkraft auf das Klemmelement aufbringbar ist, und
eine auf der Supportunterseite aufliegende Lagerplatte.

Das Betätigungselement erstreckt sich von der Lagerplatte durch das Supportelement zum Klemmelement entlang einer Mittelachse. Die Befestigungsvorrichtung weist zwei bezüglich der Mittelachse gegenüber einander liegende Aufnahmeräume auf, welche jeweils der Aufnahme von einem Haltesteg des Befestigungsprofils dienen.

Die Anordnung von zwei Aufnahmeräumen hat den Vorteil, dass die Befestigungsvorrichtung an zwei Haltestegen am Befestigungsprofil abgestützt bzw. gehalten werden kann. Es gibt dabei zwei determinierte Stellen am Befestigungsprofil, an welchen die Abstützung erfolgt..

Eine weitergehende Abstützung an baulichen Gegebenheiten, wie beispielweise an einer Wand, sind nicht nötig. Eine Abstützung der Befestigungsvorrichtung gegen die Wand ist ebenfalls nicht nötig. Insofern kann die Einbausituation besser kontrolliert werden, da die Abstützung im Wesentlichen ausschliesslich am Einbauprofil erfolgt

Weiter kann eine verbesserte Verbindung zwischen der Befestigungsvorrichtung und dem Befestigungsprofil bereitgestellt werden.

Darüber hinaus ergeht der Vorteil, dass die Befestigungsvorrichtung bezüglich der Mittelachse beidseitig abgestützt ist.

Das Befestigungsprofil ist vorzugsweise ein C-Profil mit einem Grundschenkel, von welchem sich zwei Seitenschenkel weg erstrecken. Jeder der Seitenschenkel weist dabei ein freies Ende auf, von welchem die Haltestege wegragen. Die Haltestege erstrecken sich dabei in den Zwischenraum zwischen den beiden Seitenschenkel. Vorzugsweise sind die Seitenschenkel vom Grundschenkel her gesehen gleich lang, so dass die Haltestege vom Grundschenkel her gesehen auf gleicher Höhe liegen. Der Grundschenkel weist bevorzugt Öffnungen auf, mit welchen das Befestigungsprofil mittels Schrauben gegen eine Wand befestigt werden kann.

Das Betätigungselement ist vorzugsweise eine Schraube und eine Mutter, wobei sich die Schraube von der Lagerplatte weg erstreckt und wobei die Mutter auf das Klemmelement wirkt. Als Mutter kann eine Sechskantmutter oder eine Flügelmutter eingesetzt werden.

Vorzugsweise sind das Klemmelement und die Lagerplatte aus einem metallischen Werkstoff. Auch das Betätigungselement ist bevorzugt aus Metall. Vorzugsweise ist das Supportelement aus Kunststoff.

Vorzugsweise sind die Aufnahmeräume derart ausgebildet, dass die Befestigungsvorrichtung in Richtung der Profilachse relativ zum Befestigungsprofil verschiebbar ist.

Die Aufnahmeräume sind vorzugsweise in Richtung der Profilachse gesehen seitlich offen.

Durch die Verschiebbarkeit ergeht der Vorteil, dass die Befestigungsvorrichtung mit dem Befestigungsprofil verbunden werden kann, wobei dann die Befestigungsvorrichtung bezüglich des Befestigungsprofils genau positioniert werden kann.

Mit anderen Worten heisst dies, dass die Aufnahmeräume derart ausgebildet sind, dass keine feste Klemmung zwischen Befestigungsvorrichtung und Befestigungsprofil möglich ist. Die Aufnahmeräume liegen demnach mit Spiel zu den Haltestegen.

Vorzugsweise ist jeder der Aufnahmeräume jeweils durch eine erste Aufnahmefläche und eine im Wesentlichen parallel zur ersten Aufnahmefläche verlaufende zweite Aufnahmefläche begrenzt. In der montierten Stellung liegen die Aufnahmeflächen auf den Oberflächen des Haltesteges auf.

Der Haltesteg erstreckt sich dabei in den Aufnahmeraum zwischen den beiden Aufnahmeflächen hinein. Der Abstand zwischen den beiden Aufnahmeflächen ist vorzugsweise grösser als die Dicke des Haltesteges, so dass entsprechendes Spiel entstehen kann.

Vorzugsweise sind die Aufnahmeräume abgesehen von den beiden Aufnahmeflächen und einer Grundfläche, die sich von der einen Aufnahmefläche zu der anderen Aufnahmefläche erstreckt, frei zugänglich, wobei die Aufnahmeräume in Richtung der Profilachse gesehen im Wesentlichen U-förmig ausgebildet sind.

In einer ersten Variante ist, vorzugsweise bei beiden Ausnehmungen, die eine der Aufnahmeflächen am Supportelement und die andere der Aufnahmeflächen an der Lagerplatte angeordnet ist. Bei der ersten Variante ergeht der Vorteil, dass das Supportelement einen Teil der Lagerung des Befestigungselements bereitstellt, wobei hierdurch eine Lagerung bereitgestellt wird, welche höher belastbar ist.

In einer zweiten Variante sind beide Aufnahmeflächen am Supportelement angeordnet. Die zweite Variante hat den Vorteil der einfachen Herstellung.

Vorzugsweise sind die Aufnahmeräume in ihrer lichten Weite fest. Besonders bevorzugt sind die Aufnahmeräume derart ausgebildet, dass die Haltestege in den Aufnahmeräumen nicht geklemmt sind.

Vorzugsweise ist die Lagerplatte mit mindestens einem am Supportelement angeformten Rastelemente zum Supportelement gesichert, wobei das Rastelement auf der Supportunterseite liegt.

Vorzugsweise ist die Lagerplatte fest auf der Supportunterseite platziert.

Vorzugsweise ist die Lagerplatte an beiden Haltestegen abgestützt. Das heisst, dass sich die Lagerplatte von einem der Haltestege zum anderen der Haltestege erstreckt und auf beiden Haltestegen abgestützt ist.

Vorzugsweise ist das Klemmelement mit einem Stützabschnitt über die Supportoberseite abgestützt. Über die Supportoberseite kann eine Stützkraft auf das Supportelement und ggf. auf die Lagerplatte einwirken.

Vorzugsweise weist die Lagerplatte einen abgekröpften Abschnitt auf. Der abgekröpfte Abschnitt ist vorzugsweise derart ausgebildet, dass die Lagerplatte auf der Seite des Befestigungselements, auf welcher die Klemmfläche liegt, von unten am Haltesteg anschlägt und wobei die Lagerplatte an gegenüberliegender Stelle von oben auf den Haltesteg anschlägt. Hierdurch kann die Klemmkraft vom Klemmelement gut in das Befestigungsprofil eingeleitet werden.

Vorzugsweise ist der abgekröpfte Abschnitt derart ausgebildet ist, dass die Lagerplatte auf einer Seite mit ihrer dem Supportelement zugewandten Oberfläche und auf der anderen Seite mit ihrer dem Supportelement abgewandten Oberfläche mit dem Haltesteg des Befestigungsprofils in Kontakt bringbar ist.

Vorzugsweise wird der abgekröpfte Abschnitt durch eine Ausnehmung am Supportelement geführt, derart, dass sich ein Teil der Lagerplatte auf Seiten der Supportoberseite erstreckt und dass sich ein anderer Teil der Lagerplatte auf Seiten der Supportunterseite erstreckt.

Vorzugsweise weist das Supportelement mindestens einen Federarm auf, welcher auf das Klemmelement wirkt und das Klemmelement gegen die Wirkung des Betätigungselementes vom Supportelement weg drückt.

Vorzugsweise ist der Aufnahmeraum derart ausgebildet, dass die Befestigungsvorrichtung über eine Verschwenkbewegung um eine Verschwenkachse, die parallel zur Mittelachse orientiert ist, mit dem Befestigungsprofil verbindbar ist.

Vorzugsweise weist die Grundfläche des Aufnahmeraums einen ersten Flächenbereich und einen zweiten Flächenbereich auf, wobei der erste Flächenbereich winklig geneigt zum zweiten Flächenbereich liegt, derart, dass die Befestigungsvorrichtung winklig geneigt zwischen den Haltestegen des Befestigungsprofils einsetzbar ist und anschliessend um die Verschwenkachse verschwenkbar ist.

Vorzugsweise weist das Supportelement Führungslaschen auf, welche Führungslaschen von der Supportoberseite wegragen und das Klemmelement seitlich führen und/oder dass das Supportelement Stützlaschen aufweist, welche Stützlaschen von der Supportunterseite wegragen, wobei die Stützlaschen in den Zwischenraum zwischen den beiden Haltestegen des Befestigungsprofils einragen, wenn die Befestigungsvorrichtung mit dem Befestigungsprofil verbunden ist. Die Stützlaschen können mit dem Grundschenkel des Befestigungsprofils in Kontakt kommen.

Ein System umfasst eine Befestigungsvorrichtung nach obiger Beschreibung und ein Befestigungsprofil mit zwei beabstandet zueinander liegenden Haltestegen, wobei im verbundenen Zustand jeweils ein Haltesteg in jeweils einen Aufnahmeraum einragen.

Vorzugsweise ist zwischen den Haltestegen und dem Aufnahmeraum Spiel vorhanden, derart, dass die Befestigungsvorrichtung in Richtung der Profilachse verschiebbar ist.

Vorzugsweise ist die Befestigungsvorrichtung ausschliesslich am Befestigungsprofil abgestützt. Diese ausschliessliche Abstützung erfolgt über die Aufnahme der Haltestege durch die Aufnahmeräume. Das heisst, dass keine Abstützung an anderen baulichen Elementen, wie beispielsweise der Wand nötig ist. Hierdurch kann ein System angegeben werden, welches unabhängig von spezifischen Einbausituationen einsetzbar ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer erfindungsgemässen Befestigungsvorrichtung;
- Fig. 2: eine Explosionsdarstellung der Befestigungsvorrichtung nach Figur 1 zusammen mit einem Befestigungsprofil;
- Fig. 3: eine perspektivische Schnittdarstellung der Befestigungsvorrichtung nach Figur 1 zusammen mit einem Befestigungsprofil;
- Fig. 4: eine weitere Schnittdarstellung der Befestigungsvorrichtung nach Figur 1 zusammen mit einem Befestigungsprofil;
- Fig. 5: eine Seitenansicht der Befestigungsvorrichtung nach Figur 1 zusammen mit einem Befestigungsprofil;
- Fig. 6: eine perspektivische Darstellung der Befestigungsvorrichtung beim Verbinden mit einem Befestigungsprofil; und
- Fig. 7: eine Draufsicht der Figur 6.

### BESCHREIBUNG BEVORZUGTER AUSFÜHRUNGSFORMEN

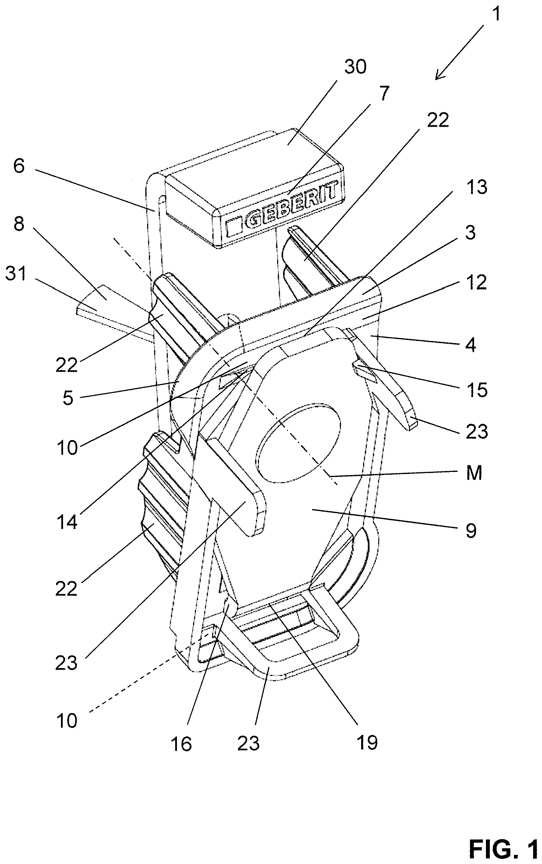

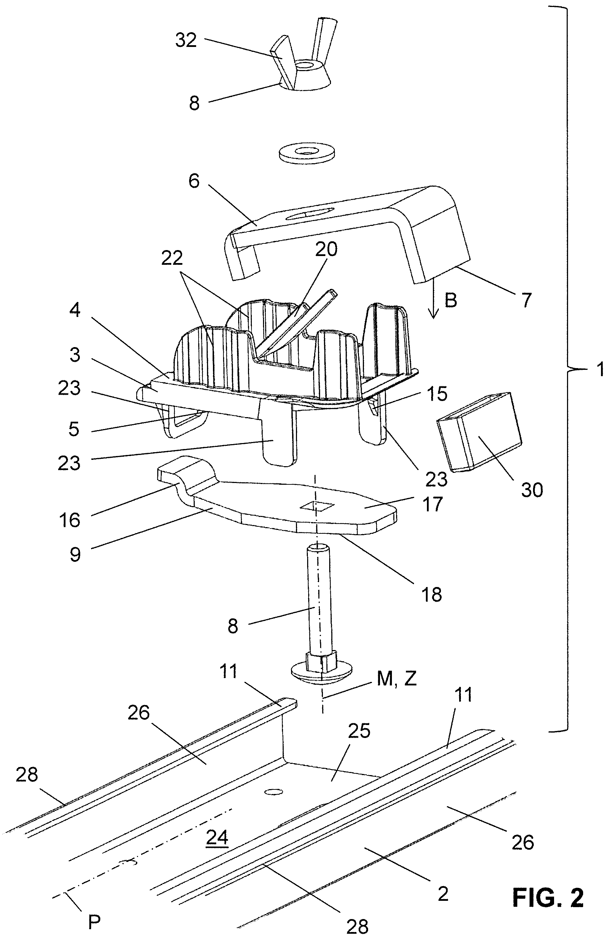

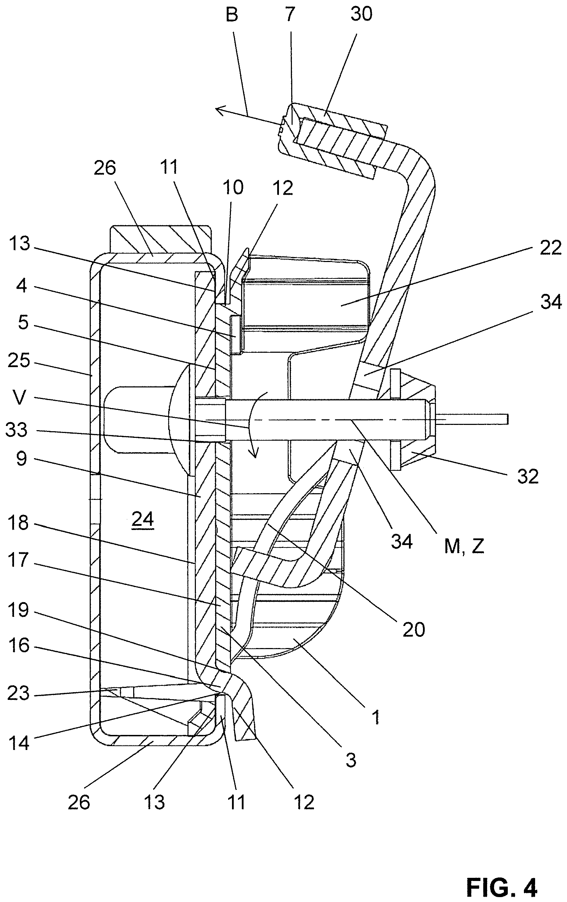

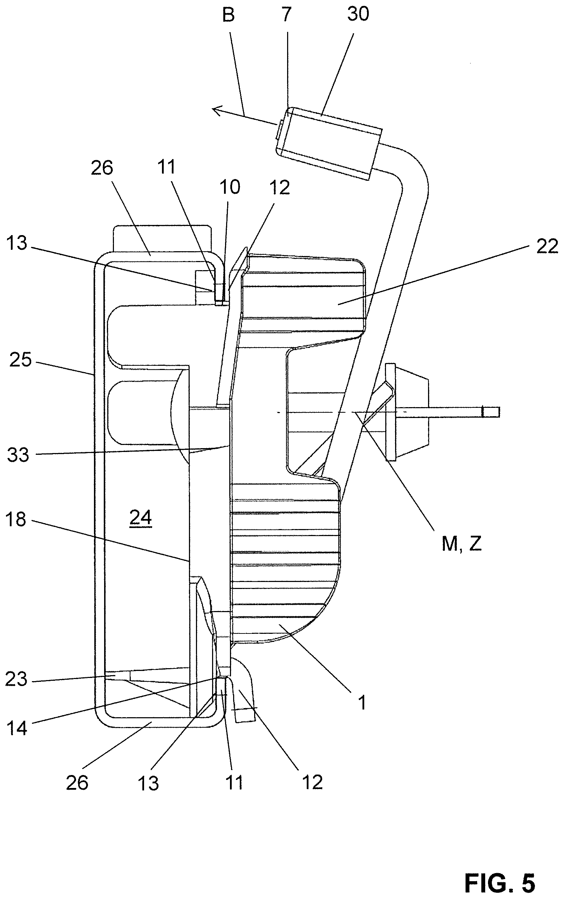

In der Figur 1 wird eine perspektivische Ansicht einer Befestigungsvorrichtung 1 zur Fixierung eines Randes eines sanitären Wannenelementes, wie eine Badewanne oder eine Duschwanne, gegen eine Wand, gezeigt. In den Figuren 2 bis 7 wird die Befestigungsvorrichtung 1 gemäss der Figur 1 in Kombination mit einem Befestigungsprofil 2 genauer dargestellt. Die Befestigungsvorrichtung 1 und das Befestigungsprofil 2 bilden ein System zur Fixierung eines Randes eines sanitären Wannenelementes, wie eine Badewanne oder eine Duschwanne, gegen eine Wand.

Das Befestigungsprofil 2 sich entlang einer Profilachse P erstreckendes C-Profil. Das C-Profil weist als Basis einen Grundschenkel 25 auf. Das Befestigungsprofil 2 wird über seine Grundfläche 26 an eine Wand geschraubt. Auf der linken und auf der rechten Seite des Grundschenkels 25 schliessen sich jeweils zwei Seitenschenkel 26 dem Grundschenkel 25 an. Jeder der Seitenschenkel 26 weist ein freies Ende 28 auf. Am freien Ende 28 ragen Haltestege 11 vom Seitenschenkel 26 ab. Die Haltestege 11 verlaufen im Wesentlichen parallel zum Grundschenkel 25. Weiter erstrecken sich die Haltestege 11 vom Seitenschenkel 26 jeweils gegen einander. Der Grundschenkel 25, die Seitenschenkel 26 und die Haltestege 11 begrenzen einen Zwischenraum 24.

Die Befestigungsvorrichtung 1 lässt sich wie untenstehend beschrieben mit dem Befestigungsprofil verbinden. Hierzu wird die Befestigungsvorrichtung 1 in Kontakt mit den Haltestegen 11 gebracht. Im verbundenen Zustand ragen Teile der Befestigungsvorrichtung 1 in den Zwischenraum 24 ein und andere Teile erstrecken sich aus dem Zwischenraum 24 heraus.

Die Figuren 1 und 2 zeigen die Befestigungsvorrichtung 1 mit ihren Einzelteilen. Die Befestigungsvorrichtung 1 umfasst im Wesentlichen ein Supportelement 3, ein Klemmelement 6, ein Betätigungselement 8 und eine Lagerplatte 9.

Das Supportelement 3 weist eine Supportoberseite 4 und eine Supportunterseite 5 auf. Auf der Supportoberseite 4 liegt das Klemmelement 6 auf und auf der Supportunterseite 5 liegt die Lagerplatte 9.

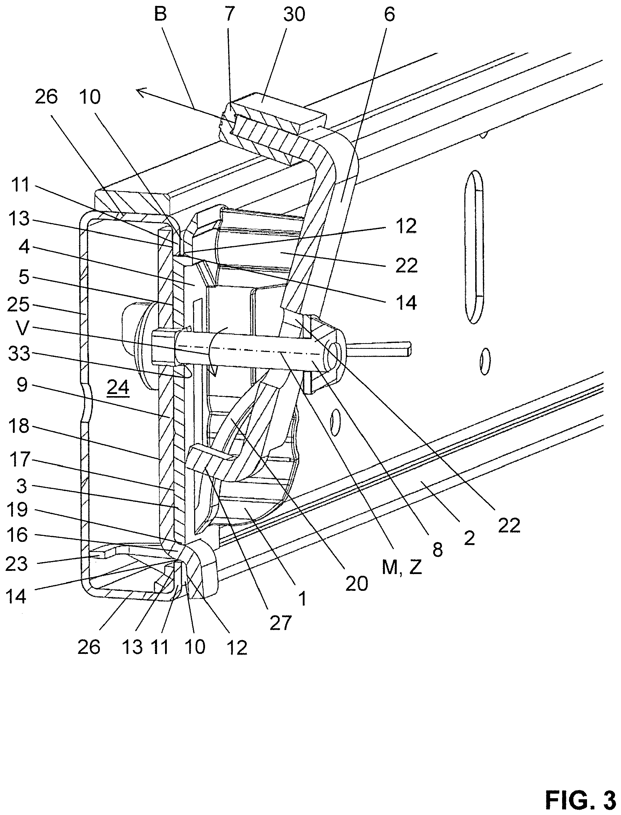

Das Klemmelement 6 weist eine Klemmfläche 7 auf, welche mit dem Wannenelement in Kontakt bringbar ist. Über die Klemmfläche 7 kann das Wannenelement gegen die Wand gedrückt werden. Die Klemmfläche 7 ragt im montierten Zustand, wie in den Figuren 3 bis 5 gezeigt, seitlich über das Befestigungsprofil 1 hinaus. Im Bereich der Klemmfläche 7 kann eine Gummitülle 30 angeordnet sein.

Mit dem Betätigungselement 8 ist eine Klemmkraft auf das Klemmelement 6 aufbringbar. Hierbei wird die Klemmfläche 7 gegen das in den Figuren nicht gezeigte Wannenelement gedrückt. Bei Betätigung des Betätigungselementes 8 wird das Klemmelement 6 im Wesentlichen gegen das Supportelement 3 bzw. das Befestigungsprofil 1 bewegt, wodurch auch die Klemmfläche 7 in die besagte Richtung bewegt wird. Die Bewegung des Klemmelementes 6 bzw. der Klemmfläche 7 wird in der Figur 3 durch den Pfeil B gezeigt.

Das Betätigungselement 8 erstreckt sich von der Lagerplatte 9 durch das Supportelement 3 zum Klemmelement 6 entlang einer Mittelachse M. Das Betätigungselement 8 ist in der gezeigten Ausführungsform, wie von der Explosionsdarstellung der Figur 2 gezeigt, eine Schraube mit einem Gewindeabschnitt 31. Der Gewindeabschnitt 31 steht in der gezeigten Ausführungsform mit einer Flügelmutter 32 in Verbindung. Der Gewindeabschnitt 31 erstreckt sich durch eine Öffnung 33 am Supportelement 3 und an der Lagerplatte 9 sowie durch eine Öffnung 34 am Klemmelement 6. Durch Betätigung der Flügelmutter 32 wird das Klemmelement 6 entsprechend geklemmt. Die Schraube steht mindestens drehfest mit der Lagerplatte 9 in Verbindung.

Weiter weist die Befestigungsvorrichtung 1 zwei bezüglich des Befestigungselementes 8 bzw. bezüglich der Mittelachse M gegenübereinander liegende Aufnahmeräume 10 auf. Wenn die Befestigungsvorrichtung 1 mit dem Befestigungsprofil 2 in Verbindung steht, ragt in jeden der Aufnahmeräume 10 ein Haltesteg 11 des Befestigungsprofils 2 ein. Über dieses Einragen wird die Befestigungsvorrichtung 1 zum Befestigungsprofil 2 gesichert. In der Figur 3 wird gezeigt, dass von links her ein Haltesteg 11 in den einen Aufnahmeraum 10 einragt und dass von rechts her der andere Haltesteg 11 in den anderen der beiden Aufnahmeräume 10 einragt. Diese Art der Lagerung hat insbesondere den Vorteil einer zweifachen Abstützung der Befestigungsvorrichtung 1 am Befestigungsprofil 2. Hierdurch können Kräfte einfacher in das Befestigungsprofil 2 eingeleitet werden.

Mit anderen Worten gesagt ist die Befestigungsvorrichtung 1 durch die Lagerung über die beiden Aufnahmeräume 10 am Befestigungsprofil 2 gut abgestützt. Eine weitergehende Abstützung an der Wand, an welcher das Befestigungsprofil 2 montiert wird, ist demnach nicht nötig.

Das Klemmelement 6 weist weiterhin einen Stützabschnitt 27 auf. Mit dem Stützabschnitt 27 stützt sich dabei das Klemmelement 6 auf der Supportoberseite 4 des Supportelementes 3 ab. Der Stützabschnitt 27 ist gegenüber der Klemmfläche 7 angeordnet.

Vorzugsweise ist die Lagerplatte 9 und auch das Klemmelement 6 aus Metall, während das Supportelement 3 aus Kunststoff ist.

Unter Bezugnahme auf die Figuren 3 bis 5 werden weitere Merkmale der Aufnahmeräume 10 genauer erläutert. Die Aufnahmeräume 10 sind derart ausgebildet, dass die Befestigungsvorrichtung 1 in Richtung der Profilachse P relativ zum Befestigungsprofil 2 verschiebbar ist. Das heisst, die Befestigungsvorrichtung 1 kann grob am Befestigungsprofil 2 platziert werden und dann im Sinne einer Feineinstellung entlang der Profilachse P verschoben werden. Die Aufnahmeräume 10 weisen demnach Spiel gegenüber den Haltestegen 11 auf, sodass die Bewegung entlang der Profilachse P entsprechend ermöglicht wird.

Jeder der Aufnahmeräume 10 ist jeweils durch eine erste Aufnahmefläche 12 und eine im Wesentlichen parallel zur ersten Aufnahmefläche 12 zweite Aufnahmefläche 13 seitlich begrenzt. Im Wesentlichen parallel heisst, dass leichte Winkelabweichung zur Parallelität möglich sind. Die Aufnahmeflächen 12, 13 stehen dabei in einem Abstand, welcher grösser ist als die Dicke des Haltesteges 11, zueinander. Weiter sind die Aufnahmeräume 10 in ihrer Tiefe quer zur Profilachse P durch eine Grundfläche 14 begrenzt. Die Distanz zwischen den beiden Grundflächen 14 der beiden gegenüberliegenden Aufnahmeräume 10 ist vorzugsweise gleich gross wie oder etwas kleiner als die Distanz zwischen den beiden Haltestegen 11, derart dass die Befestigungsvorrichtung 1 relativ zum Befestigungsprofil 2 verschiebbar ist.

Abgesehen von den beiden Aufnahmeflächen 12, 13 und der Grundfläche 14 sind die Aufnahmeräume 10 frei zugänglich. Das heisst, es gibt keine weiteren Restriktionen bezüglich allfälligen Begrenzungsflächen der Aufnahmeräume. In Richtung der Profilachse P gesehen sind die Aufnahmeräume 10 demnach im Wesentlichen U-förmig ausgebildet.

Von den Figuren kann gut erkannt werden, dass die einen der Aufnahmeflächen 12, 13 am Supportelement 3 und die anderen der Aufnahmeflächen 13, 12 an der Lagerplatte platziert sind. Hierdurch kann die Lagerplatte 9 entsprechend vorteilhaft positioniert werden. Die Lagerplatte 9 ist derart ausgebildet, dass diese an beiden Haltestegen 11 abgestützt ist. Diese Abstützung hat den Vorteil, dass Kräfte, welche über die Klemmfläche 7 und das Klemmelement 6 sowie das Betätigungselement 8 auf die Lagerplatte 9 wirken, gut in das Befestigungsprofil 2 eingeleitet werden können.

In der gezeigten Ausführungsform weist die Lagerplatte 9 einen abgekröpften Abschnitt 16 auf. Dabei liegt die Lagerplatte 9 derart in der Befestigungsvorrichtung 1, dass die Lagerplatte 9 auf der Seite des Befestigungselementes 1, auf welcher die Klemmfläche liegt, von unten an den Haltesteg 11 anschlägt und dass die Lagerplatte 9 an der gegenüberliegenden Seite von oben auf den Haltesteg 11 anschlägt. Hierdurch kann ebenfalls eine verbesserte Krafteinleitung erreicht werden. In der gezeigten Ausführungsform ragt der abgekröpfte Abschnitt 16 durch eine Ausnehmung 19 am Supportelement 3 von unten her nach oben, derart, dass ein Teil der Lagerplatte 9 sich auf Seiten der Supportoberseite 4 erstreckt und dass ein anderer Teil der Lagerplatte 9 sich auf Seiten der Supportunterseite erstreckt. Vorzugsweise ist der abgekröpfte Abschnitt derart ausgebildet ist, dass die Lagerplatte 9 auf einer Seite mit ihrer dem Supportelement zugewandten Oberfläche 17 und auf der anderen Seite mit ihrer dem Supportelement abgewandten Oberfläche 18 mit dem Haltesteg des Befestigungsprofils in Kontakt bringbar ist.

Die Lagerplatte 9 ist in der gezeigten Ausführungsform fest auf der Supportunterseite 5 angeordnet. Wobei sich die Lagerplatte 9, wie bereits erwähnt, auch auf die Supportoberseite 4 erstreckt bzw. erstrecken kann. In der gezeigten Ausführungsform ist die Lagerplatte 9 über mindestens ein Rastelement 15 zum Supportelement 3 gesichert. Das mindestens eine Rastelement 15 liegen auf der Supportunterseite 5.

Weiter weist das Supportelement 3 mindestens einen Federarm 20 auf, welcher auf das Klemmelement 6 wirkt und das Klemmelement 6 gegen die Wirkung der Betätigungselementes 8 vom Supportelement 3 wegdrückt. Die Federwirkung des Federarms 20 dient im Wesentlichen dazu, das Klemmelement 6 unter einer leichten Vorspannung zu halten, sodass beim Transport und der Montage keine Klappergeräusche entstehen.

Weiter sichert auch das Betätigungselement 8 die Lagerplatte 9 gegen die Supportunterseite 4. Der mindestens eine Federarm 20 kann dabei die Lagerplatte 9 aufgrund der Verbindung mit dem Befestigungselement 8 gegen die Supportunterseite 4 drücken.

Weiter weist das Supportelement 3 Führungslaschen 22 auf. Die Führungslaschen 22 stehen von der Supportoberseite 4 weg und führen das Klemmelement 6 seitlich. Auf der Supportunterseite 5 weist das Supportelement 3 Stützlaschen 23 auf, welche von der Supportunterseite 5 weg ragen. Die Stützlaschen 23 ragen dabei in den Zwischenraum 24 zwischen den beiden Haltestegen 11 des Befestigungsprofils 2 ein, wenn die Befestigungsvorrichtung 1 mit dem Befestigungsprofil verbunden ist.

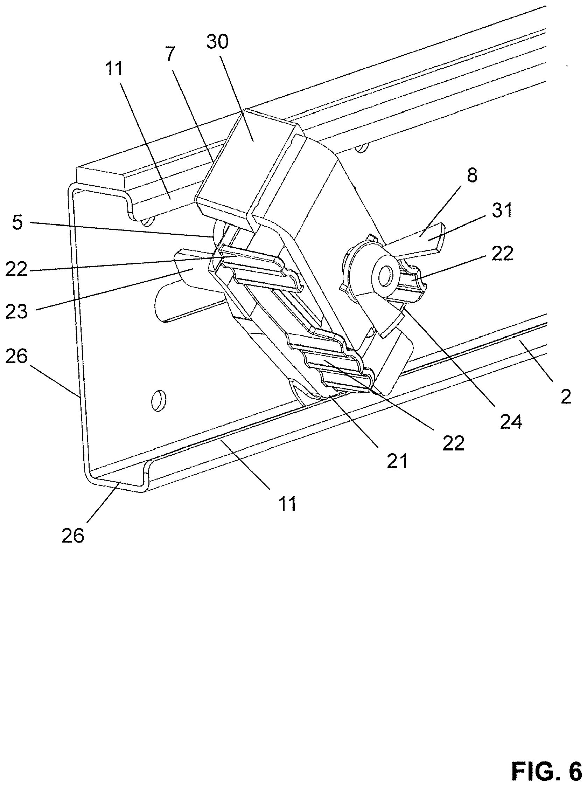

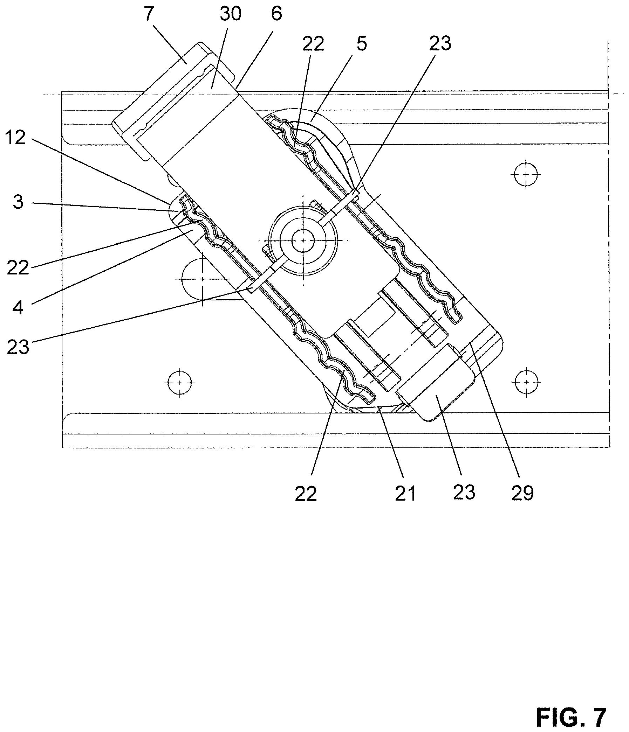

In der Figur 6 wird ein Montageschritt der Befestigungsvorrichtung 1 zum Befestigungsprofil 2 gezeigt. Die Aufnahmeräume 10 sind dabei derart ausgebildet, dass die Befestigungsvorrichtung 1 über eine Verschwenkbewegung V um eine Verschwenkachse Z, die parallel zur Mittelachse M orientiert ist, mit dem Befestigungsprofil 2 verbindbar ist. Ausgehend von der in der Figur 6 gezeigten Stellung wird nun die Befestigungsvorrichtung entlang der Verschwenkbewegung V und der Verschwenkachse Z verschwenkt, bis die Befestigungsvorrichtung 1 die in den Figuren 3 bis 5 gezeigte Position einnimmt. Durch dieses Verschwenken kann eine einfache Montage der Befestigungsvorrichtung 1 erreicht werden. Um die Verschwenkbewegung V zu ermöglichen weist die Grundfläche 14, wie in den Figuren 1 und 6 sowie 7 ersichtlich ist, einen ersten Flächenbereich 21 und einen zweiten Flächenbereich 29 auf. Der Flächenbereich 21 ist dabei winklig geneigt zum zweiten Flächenbereich 29 orientiert, derart, dass die Befestigungsvorrichtung wie in den Figuren 6 und 7 gezeigt, winklig geneigt zwischen den Haltestegen 11 des Befestigungsprofils 2 einsetzbar ist und anschliessend über die Verschwenkachse Z verschwenkbar ist. Vor der Verschwenkung verläuft der erste Flächenbereich 21 parallel zur Profilachse P und nach der Verschwenkung verläuft der zweite Flächenbereich 29 parallel zur Profilachse P.

**BEZUGSZEICHENLISTE**

| | | | |
|---|---|---|---|
| 1 | Befestigungsvorrichtung | 25 | Grundschenkel |
| 2 | Befestigungsprofil | 26 | Seitenschenkel |
| 3 | Supportelement | 27 | Stützabschnitt |
| 4 | Supportoberseite | 28 | freies Ende |
| 5 | Supportunterseite | 29 | zweiter Flächenbereich |
| 6 | Klemmelement | 30 | Gummitülle |
| 7 | Klemmfläche | 31 | Gewindeabschnitt |
| 8 | Betätigungselement | 32 | Flügelmutter |
| 9 | Lagerplatte | 33 | Öffnung |
| 10 | Aufnahmeraum | 34 | Öffnung |
| 11 | Haltesteg | | |
| 12 | erste Aufnahmefläche | B | Bewegungsrichtung |
| 13 | zweite Aufnahmefläche | M | Mittelachse |
| 14 | Grundfläche | P | Profilachse |
| 15 | Rastelement | V | Verschwenkbewegung |
| 16 | abgekröpfter Abschnitt | Z | Verschwenkachse |
| 17 | zugewandte Oberfläche | | |
| 18 | abgewandte Oberfläche | | |
| 19 | Ausnehmung | | |
| 20 | Federarm | | |
| 21 | Flächenbereich | | |
| 22 | Führungslaschen | | |
| 23 | Stützlaschen | | |
| 24 | Zwischenraum | | |

## Patentansprüche

1. Befestigungsvorrichtung (1) zur Fixierung eines Randes eines sanitären Wannenelementes, wie eine Badewanne oder eine Duschwanne, gegen eine Wand, wobei die Befestigungsvorrichtung mit einem sich in Richtung einer Profillasche (P) erstreckendem Befestigungsprofil (2) verbindbar ist,
wobei die Befestigungsvorrichtung (1) ein Supportelement (3) mit einer Supportoberseite (4) und einer Supportunterseite (5),
ein auf der Supportoberseite (4) aufliegendes Klemmelement (6) mit einer mit dem Wannenelement in Kontakt bringbaren Klemmfläche (7),
ein Betätigungselement (8), mit welchem eine Klemmkraft auf das Klemmelement (6) aufbringbar ist, und
eine auf der Supportunterseite (5) aufliegende Lagerplatte (9), umfasst
wobei sich das Betätigungselement (8) von der Lagerplatte (9) durch das Supportelement (3) zum Klemmelement (6) entlang einer Mittelachse (M) erstreckt,
**dadurch gekennzeichnet, dass**
die Befestigungsvorrichtung (1) zwei bezüglich der Mittelachse (M) gegenüber einander liegende Aufnahmeräume (10) aufweist, welche jeweils der Aufnahme von einem Haltesteg (11) des Befestigungsprofils (2) dienen.

2. Befestigungsvorrichtung (1) nach Anspruch 1, **dadurch gekennzeichnet, dass** die Aufnahmeräume (10) derart ausgebildet sind, dass die Befestigungsvorrichtung (1) in Richtung der Profilachse (P) relativ zum Befestigungsprofil (2) verschiebbar ist.

3. Befestigungsvorrichtung (1) nach Anspruch 1 oder 2, **dadurch gekennzeichnet, dass** jeder der Aufnahmeräume (10) jeweils durch eine erste Aufnahmefläche (12) und eine im Wesentlichen parallel zur ersten Aufnahmefläche (12) verlaufende zweite Aufnahmefläche (13) begrenzt ist.

4. Befestigungsvorrichtung (1) nach Anspruch 3, **dadurch gekennzeichnet, dass** die Aufnahmeräume (10) abgesehen von den beiden Aufnahmeflächen (12, 13) und einer Grundfläche (14), die sich von der einen Aufnahmefläche (12) zu der anderen Aufnahmefläche (13) erstreckt, frei zugänglich sind, wobei die Aufnahmeräume (10) in Richtung der Profilachse (P) gesehen im Wesentlichen U-förmig ausgebildet sind.

5. Befestigungsvorrichtung (1) nach Anspruch 3 oder 4, **dadurch gekennzeichnet, dass** die eine der Aufnahmeflächen (12, 13) am Supportelement (3) und die andere der Aufnahmeflächen (13, 12) an der Lagerplatte (9) angeordnet ist; und/oder dass beide Aufnahmeflächen am Supportelement angeordnet sind.

6. Befestigungsvorrichtung (1) nach einem der vorhergehenden Ansprüche, **dadurch gekennzeichnet, dass** die Aufnahmeräume (10) in ihrer lichten Weite fest sind bzw. dass die Aufnahmeräume (10) derart ausgebildet sind, dass die Haltestege (11) in den Aufnahmeräumen nicht geklemmt sind.

7. Befestigungsvorrichtung (1) nach einem der vorhergehenden Ansprüche, **dadurch gekennzeichnet, dass** die Lagerplatte (9) mit mindestens einem am Supportelement (3) angeformten Rastelement (15) zum Supportelement (3) gesichert ist, wobei das mindestens eine Rastelemente (15) auf der Supportunterseite (5) liegt; und/oder dass die Lagerplatte (9) an beiden Haltestegen (11) abgestützt ist.

8. Befestigungsvorrichtung (1) nach einem der vorhergehenden Ansprüche, **dadurch gekennzeichnet, dass** die Lagerplatte (9) fest auf der Supportunterseite (5) angeordnet ist und/oder dass das Klemmelement (6) mit einem Stützabschnitt (27) über die Supportoberseite (6) abgestützt ist.

9. Befestigungsvorrichtung (1) nach einem der vorhergehenden Ansprüche, **dadurch gekennzeichnet, dass** die Lagerplatte (9) einen abgekröpften Abschnitt (16) aufweist, wobei die Lagerplatte (9) auf der Seite des Befestigungselements (1), auf welcher die Klemmfläche (7) liegt, von unten am Haltesteg (11) anschlägt und wobei die Lagerplatte (9) an gegenüberliegender Stelle von oben auf den Haltesteg (11) anschlägt.

10. Befestigungsvorrichtung (1) nach Anspruch 9, **dadurch gekennzeichnet, dass** der abgekröpfte Abschnitt (16) durch eine Ausnehmung (19) am Supportelement (3) geführt wird, derart, dass ein Teil der Lagerplatte (9) sich auf Seiten der Supportoberseite (4) erstreckt und dass ein Teil der Lagerplatte (9) sich auf Seiten der Supportunterseite (5) erstreckt.

11. Befestigungsvorrichtung (1) nach einem der vorhergehenden Ansprüche, **dadurch gekennzeichnet, dass** das Supportelement (3) mindestens einen Federarm (20) aufweist, welcher auf das Klemmelement (6) wirkt und das Klemmelement (6) gegen die Wirkung des Betätigungselementes (8) vom Supportelement (3) weg drückt.

12. Befestigungsvorrichtung (1) nach einem der vorhergehenden Ansprüche, **dadurch gekennzeichnet, dass** der Aufnahmeraum (10) derart ausgebildet ist, dass die Befestigungsvorrichtung (1) über eine Verschwenkbewegung (V) um eine Verschwenkachse (Z), die parallel zur Mittelachse (M) orientiert ist, mit dem Befestigungsprofil (2) verbindbar ist.

13. Befestigungsvorrichtung (1) nach Anspruch 4 und 12, **dadurch gekennzeichnet, dass** die Grundfläche (14) des Aufnahmeraums (10) einen ersten Flächenbereich (21) und einen zweiten Flächenbereich (29) aufweist, wobei der erste Flächenbereich (21) winklig geneigt zum zweiten Flächenbereich (29) liegt, derart, dass die Befestigungsvorrichtung (1) winklig geneigt zwischen den Haltestegen (11) des Befestigungsprofils (2) einsetzbar ist und anschliessend um die Verschwenkachse (Z) verschwenkbar ist.

14. Befestigungsvorrichtung (1) nach einem der vorhergehenden Ansprüche, **dadurch gekennzeichnet, dass** das Supportelement (3) Führungslaschen (22) aufweist, welche Führungsflaschen (22) von der Supportoberseite (4) wegragen und das Klemmelement (6) seitlich führen und/oder dass Supportelement (3) Stützlaschen (23) aufweist, welche Stützlaschen (23) von der Supportunterseite (5) wegragen, wobei die Stützlaschen (23) in den Zwischenraum (24) zwischen den beiden Haltestegen (11) des Befestigungsprofils (2) einragen, wenn die Befestigungsvorrichtung (1) mit dem Befestigungsprofil (2) verbunden ist.

15. System umfassend eine Befestigungsvorrichtung (1) nach einem der vorhergehenden Ansprüche und ein Befestigungsprofil (2) mit zwei beabstandet zueinander liegenden Haltestegen (11), wobei im verbundenen Zustand jeweils ein Haltesteg (11) in jeweils einen Aufnahmeraum (10) einragen.

16. System nach Anspruch 15, **dadurch gekennzeichnet, dass** zwischen den Haltestegen (11) und dem Aufnahmeraum (10) Spiel vorhanden ist, derart, dass die Befestigungsvorrichtung (1) in Richtung der Profilachse (P) verschiebbar ist; und/oder dass die Befestigungsvorrichtung ausschliesslich am Befestigungsprofil abgestützt ist.

## Claims

1. Fastening device (1) for securing an edge of a sanitary tub element, such as a bath tub or a shower basin, against a wall, wherein the fastening device is connectable with a fastening profile (2) which extends in a direction of a profile lug (P),
wherein the fastening device (1) comprises
a support element (3) with a support top side (4) and a support bottom side (5),
a clamping element (6) resting on the support top side (4), comprising a clamping surface (7) which can be brought into contact with the tub element,
an actuation element (8), by means of which a clamping force can be exerted upon the clamping element (6), and
a bearing plate (9) resting on the support bottom side (5),
wherein the actuation element (8) extends from the bearing plate (9) through the support element (3) to the clamping element (6) along a center axis (M),
**characterized in that** the fastening device (1) comprises two receiving spaces (10) which are arranged opposite each other with respect to the center axis (M), and which each serve to receive one holding web (11) of the fastening profile (2).

2. Fastening device (1) according to claim 1, **characterized in that** the receiving spaces (10) are formed such that the fastening device (1) is displaceable in a direction of the profile axis (P) with respect to the fastening profile (2).

3. Fastening device (1) according to claim 1 or 2, **characterized in that** each of the receiving spaces (10) is limited by a first receiving surface (12) and a second receiving surface (13) extending essentially parallel to the first receiving space (12).

4. Fastening device (1) according to claim 3, **characterized in that** the receiving spaces (10) are freely accessible, except the two receiving surfaces (12, 13) and a base surface (14) extending from the one receiving surface (12) to the other receiving surface (13), wherein the receiving spaces (10) are formed essentially in a U-form in the direction of the profile axis (P).

5. Fastening device (1) according to claim 3 or 4, **characterized in that** said one of the receiving surfaces (12, 13) is arranged on the support element (3) and the other of the receiving surfaces (13, 12) is arranged on the bearing plate (9); and/or that both receiving surfaces are arranged on the support element.

6. Fastening device (1) according to one of the preceding claims, **characterized in that** the receiving spaces (10) are fixed in their clear dimension, or that that the receiving spaces (10) are formed such that the holding webs (11) are not clamped in the receiving spaces, respectively.

7. Fastening device (1) according to one of the preceding claims, **characterized in that** the bearing plate (9) is secured with respect to the support element (3) by at least one latching element (15) formed on the support element (3), wherein the at least one latching element (15) rests on the support bottom side (5); and/or that the bearing plate (9) is supported on both holding webs (11).

8. Fastening device (1) according to one of the preceding claims, **characterized in that** the bearing plate (9) is arranged in a fixed manner on the support bottom side (5) and/or that the clamping element (6) is supported with a supporting section (27) via the support top side (6).

9. Fastening device (1) according to one of the preceding claims, **characterized in that** the bearing plate (9) comprises an offset section (16), wherein the bearing plate (9), on the side of the fastening element (1) on which the clamping surface (7) rests, abuts against the holding web (11) from the bottom and wherein the bearing plate (9) on the opposite site abuts against the holding web (11) from the top.

10. Fastening device (1) according to claim 9, **characterized in that** the offset section (16) is guided through a recess (19) on the support element (3), such that a part of the bearing plate (9) extends on the side of the support top side (4) and that a part of the bearing plate (9) extends on the side of the support bottom side (5).

11. Fastening device (1) according to one of the preceding claims, **characterized in that** the support element (3) comprises at least one spring arm (20) which acts on the clamping element (6) and presses the clamping element (6) away from the support element (3) against the action of the actuation element (8).

12. Fastening device (1) according to one of the preceding claims, **characterized in that** the receiving space (10) is formed such that the fastening device is connectable to the fastening profile (2) via a pivot movement (V) about a pivot axis (Z), which is oriented parallel to the center axis (M).

13. Fastening device (1) according to claim 4 and 12, **characterized in that** the base surface (14) of the receiving space (10) comprises a first surface region (21) and a second surface region (29), wherein the first surface region (21) is arranged at an angularly inclined manner to the second surface region (29), such that the fastening device (1) is insertable in an angularly inclined manner between the holding webs (11) of the fastening profile (2) and subsequently is pivotable about the pivot axis (Z).

14. Fastening device (1) according to one of the preceding claims, **characterized in that** the support element (3) comprises guide lugs (22), said guide lugs (22) projecting away from the support top side (4) and laterally guiding the clamping element (6), and/or that the support element (3) comprises support lugs (23), said support lugs (23) projecting into the clearance (24) between the two holding webs (11) of the fastening profile (2), when the fastening device (1) is connected to the fastening profile (2).

15. System comprising a fastening device (1) according to one of the preceding claims and a fastening profile (2) with two holding webs (11) arranged spaced apart from each other, wherein in a connected state, in each case one holding web (11) projects into one receiving space (10).

16. System according to claim 15, **characterized in that** play exits between the holding webs (11) and the receiving space (10), such that the fastening device (1) is displaceable in the direction of the profile axis (P); and/or that the fastening device is supported exclusively on the fastening profile.

## Revendications

1. Dispositif de fixation (1) pour fixer un bord d'un élément de bassine sanitaire, tel qu'une baignoire ou un receveur de douche, contre un mur, le dispositif de fixation pouvant être relié à un profilé de fixation (2) s'étendant en direction d'un support de profilé (P),
le dispositif de fixation (1) comprenant
un élément de support (3) avec un côté supérieur de support (4) et un côté inférieur de support (5),
un élément de serrage (6) reposant sur le côté supérieur de support (4) et ayant une surface de serrage (7) qui peut être amené en contact avec l'élément de bassine,
un élément d'actionnement (8), moyennant lequel une force de serrage peut être appliquée sur l'élément de serrage (6), et
une plaque de montage (9) reposant sur le côté inférieur de support (5),
dans lequel l'élément d'actionnement (8) s'étend depuis la plaque de montage (9) à travers l'élément de support (3) jusqu'à l'élément de serrage (6) le long d'un axe central (M), **caractérisé en ce que**
le dispositif de fixation (1) présente deux espaces de réception (10) opposés l'un à l'autre par rapport à l'axe central (M), qui servent chacun à recevoir une nervure de maintien (11) du profilé de fixation (2).

2. Dispositif de fixation (1) selon la revendication 1, **caractérisé en ce que** les espaces de réception (10) sont conçus de telle manière que le dispositif de fixation (1) peut être déplacé en direction de l'axe du profilé (P) par rapport au profilé de fixation (2).

3. Dispositif de fixation (1) selon la revendication 1 ou 2, **caractérisé en ce que** chacun des espaces de réception (10) est délimité par une première surface de réception (12) et une deuxième surface de réception (13) s'étendant sensiblement parallèlement à la première surface de réception (12).

4. Dispositif de fixation (1) selon la revendication 3, **caractérisé en ce que** les espaces de réception (10), mis à part les deux surfaces de réception (12, 13) et une surface de base (14) qui s'étend de l'une surface de réception (12) à l'autre surface de réception (13), sont librement accessibles, les espaces de réception (10), vus dans la direction de l'axe du profilé (P) sont essentiellement en forme de U.

5. Dispositif de fixation (1) selon la revendication 3 ou 4, **caractérisé en ce que** l'une des surfaces de réception (12, 13) est disposée sur l'élément de support (3) et l'autre des surfaces de réception (13, 12) est disposée sur la plaque de montage (9); et/ou que les deux surfaces de réception sont disposées sur l'élément de support.

6. Dispositif de fixation (1) selon l'une des revendications précédentes, **caractérisé en ce que** les espaces de réception (10) sont fixes dans leur largeur libre ou **en ce que** les espaces de réception (10) sont conçus de telle sorte que les nervures de maintien (11) ne sont pas serrées dans les espaces de réception.

7. Dispositif de fixation (1) selon l'une des revendications précédentes, **caractérisé en ce que** la plaque de montage (9) est fixée à l'élément de support (3) par au moins un élément d'encliquetage (15) formé sur l'élément de support (3), l'au moins un élément d'encliquetage (15) se trouvant sur le côté inférieur de support (5) repose ; et/ou que la plaque de montage (9) repose sur les deux nervures de maintien (11).

8. Dispositif de fixation (1) selon l'une des revendications précédentes, **caractérisé en ce que** la plaque de montage (9) est disposée fixement sur le côté inférieur de support (5) et/ou **en ce que** l'élément de serrage (6) repose avec une section d'appui sur le côté supérieur de support (6).

9. Dispositif de fixation (1) selon l'une des revendications précédentes, **caractérisé en ce que** la plaque de montage (9) présente une section coudée (16), dans lequel la plaque de montage (9) vient en butée du côté de l'élément de fixation (1), lequel se situe la surface de serrage (7), depuis le bas au niveau de la nervure de maintien (11), et dans lequel la plaque de montage (9) vient en butée depuis le haut au niveau de la nervure de maintien (11) sur un point opposé.

10. Dispositif de fixation (1) selon la revendication 9, **caractérisé en ce que** la section coudée (16) est guidée à travers un évidement (19) sur l'élément de support (3), de telle manière qu'une partie de la plaque de montage (9) s'étend sur le côté du côté supérieur de support (4) s'étend et qu'une partie de la plaque de montage (9) s'étend du côté du côté inférieur de support (5).

11. Dispositif de fixation (1) selon l'une des revendications précédentes, **caractérisé en ce que** l'élément de support (3) présente au moins un bras élastique (20) qui agit sur l'élément de serrage (6) et repousse l'élément de serrage (6) de l'élément de support (3), contre l'action de l'élément d'actionnement (8).

12. Dispositif de fixation (1) selon l'une des revendications précédentes, **caractérisé en ce que** l'espace de réception (10) est conçu de telle sorte que le dispositif de fixation (1) peut être connecté à travers un mouvement de pivotement (V) autour d'un axe de pivotement (Z) qui est orienté parallèlement à l'axe central (M), avec le profilé de montage (2).

13. Dispositif de fixation (1) selon les revendications 4 et 12, **caractérisé en ce que** le fond (14) de l'espace de réception (10) présente une première surface (21) et une deuxième surface (29), la première surface (21) étant incliné sous un angle par rapport à la deuxième surface (29) de telle manière que le dispositif de fixation (1) peut être inséré sous un angle entre les nervures de maintien (11) du profilé de fixation (2) et peut ensuite pivoter autour de l'axe de pivotement (Z).

14. Dispositif de fixation (1) selon l'une des revendications précédentes, **caractérisé en ce que** l'élément de support (3) présente des languettes de guidage (22), lesquelles languettes de guidage (22) font saillie du côté supérieur de support (4) et guident latéralement l'élément de serrage (6) et/ou que l'élément de support (3) présente des languettes de d'appui (23), lesquelles languettes d'appui (23) dépassent du côté inférieur de support (5), les languettes d'appui (23) faisant saillie dans l'espace intermédiaire (24) entre les deux nervures de maintien (11) du profilé de fixation (2), lorsque le dispositif de fixation (1) est relié au profilé de fixation (2).

15. Système comprenant un dispositif de fixation (1) selon l'une des revendications précédentes et un profilé de fixation (2) avec deux nervures de maintien (11) espacées l'une par rapport à l'autre, dans lequel à l'état raccordé, chaque nervure de maintien (11) s'introduit dans un espace de réception respectif (10).

16. Système selon la revendication 15, **caractérisé en ce qu'**il existe un jeu entre les nervures de maintien (11) et l'espace de réception (10), de sorte que le dispositif de fixation (1) peut être déplacé dans la direction de l'axe du profilé (P) ; et/ou que le dispositif de fixation repose exclusivement sur le profilé de fixation.
